# EUROPÄISCHE PATENTSCHRIFT

(11) **EP 1 844 117 B1**
(45) Veröffentlichungstag und Bekanntmachung des Hinweises auf die Patenterteilung: **12.08.2009**
(21) Anmeldenummer: 06701299.7
(22) Anmeldetag: 23.01.2006
(51) Int. Cl.: C09D 7/12, C09D 17/00, C09C 1/00, C08K 3/24

(54) **VERWENDUNG VON ALUMINIUMHALTIGEN BISMUTVANADATPIGMENTEN ZUR EINFÄRBUNG VON PULVERLACKEN**
USE OF BISMUTH VANADATE PIGMENTS CONTAINING ALUMINIUM FOR COLOURING COATING POWDER
UTILISATION DE PIGMENTS DE BISMUTVANADATE CONTENANT DE L'ALUMINIUM POUR COLORER DES PEINTURES SOUS FORME DE POUDRE

(30) Priorität: 26.01.2005 DE 102005003717
(43) Veröffentlichungstag der Anmeldung: 17.10.2007
(73) Patentinhaber: BASF SE, 67056 Ludwigshafen (DE)
(72) Erfinder: BRAMNIK, Kirill, 68163 Mannheim (DE); KORONA, Eckhard, 67434 Neustadt (DE); MRONGA, Norbert, 69221 Dossenheim (DE)
(74) Vertreter: Huhn, Michael
(86) Internationale Anmeldenummer: PCT/EP2006/050377
(87) Internationale Veröffentlichungsnummer: WO 2006/079616

(56) Entgegenhaltungen:
- EP-A- 0 723 998
- EP-A- 1 072 656
- US-A- 4 063 956
- US-B1- 6 458 197
- ENDRISS H: "BISMUTH-VANADATE PIGMENTS IN PAINTS. TECHNICAL, TOXOLOGICAL AND ECOLOGICAL ASPECTS" 1. Dezember 1995 (1995-12-01), BULLETIN OF THE BISMUTH INSTITUTE, BRUSSELS, BE, PAGE(S) 1-3 , XP002041943 ISSN: 0772-1315 Seite 2, rechte Spalte - Seite 2, rechte Spalte

## Beschreibung

Die vorliegende Erfindung betrifft die Verwendung von Bismutvanadatpigmenten, die einen Gehalt von ≥ 1,4 Gew.-% Aluminium aufweisen, zur Einfärbung von Pulverlacken.

Außerdem betrifft die Erfindung Pulverlacke und Pulverlackierungen, die diese Bismutvanadatpigmente als farbgebende Komponente enthalten.

Nicht zuletzt betrifft die Erfindung neue Bismutvanadatpigmente, die mit einer Beschichtung versehen sind, die schwerlösliche Aluminium- und Calciumverbindungen enthält und einen Aluminiumgehalt von ≥ 1,4 Gew.-%, bezogen auf das gesamte Pigment, aufweist.

Bismutvanadatpigmente sind seit langem bekannt und werden insbesondere für die Einfärbung von Lacken und Kunststoffen eingesetzt. Neben dem reinen BiVO₄-Pigment, das in monokliner oder tetragonaler Kristallmodifikation vorliegen kann, wird auch eine Reihe von BiVO₄-Pigmenten beschrieben, in denen ein Teil der Metall- und/oder Sauerstoffatome durch andere Metalle und/oder Nichtmetalle ersetzt ist. Zur Verbesserung ihrer Anwendungseigenschaften, insbesondere ihrer thermischen Stabilität, Wetterechtheit und Beständigkeit gegen Chemikalien, werden die Bismutvanadatpigmente oft mit Schutzhüllen aus Metallphosphaten, aber auch mit Schutzhüllen aus Metalloxiden und/oder Metallfluoriden versehen, die durch Auffällen der Phosphate, Oxide bzw. Hydroxide und Fluoride aus vorzugsweise wäßrigen Lösungen löslicher Salze der entsprechenden Metalle erzeugt werden. Beispiele für besonders häufig für die stabilisierenden Beschichtungen eingesetzte Verbindungen sind die Phosphate von Calcium, Zink und Aluminium und deren Mischungen sowie die Oxide von Aluminium und Silicium.

Die Beschichtung von Bismutvanadatpigmenten mit stabilisierenden Aluminiumverbindungen ist in einer Reihe von Dokumenten beschrieben.

So ist aus der US-A-5 123 965 die Beschichtung mit Aluminiumphosphat oder einer Mischung von Aluminiumphosphat und Zinkphosphat zur Stabilisierung gegen den Angriff von Salzsäure bekannt. Außerdem ist die Stabilisierung mit Aluminiumphosphat oder Aluminiumoxid in der US-A-4 115 141 beschrieben.

In der US-A-4 752 460 werden dotierte tetragonale Bismutvanadatpigmente mit Siliciumdioxid und Aluminiumoxid beschichtet, um ihre Stabilität allgemein zu erhöhen.

Die Stabilisierung phosphathaltiger monokliner Bismutvanadatpigmente durch aufeinander folgende Beschichtung mit Aluminiumhydroxid und Calciumphosphat ist aus der EP-A-551 637 bekannt. In der US-A-4 063 956 werden thermische Stabilität und Säurebeständigkeit monokliner Bismutvanadatpigmente durch Belegung mit wasserhaltigen Metalloxiden, wie Aluminiumoxid, und einer anschließenden dichten Siliciumdioxidschicht erhöht.

Schließlich ist aus der EP-A-723 998 eine Mehrfachbeschichtung von zunächst mit Natriumphosphat aktivierten Bismutvanadatpigmenten zur Erhöhung ihrer thermischen Stabilität bekannt, bei der Siliciumdioxid, Aluminiumoxid, Aluminiumphosphat und/oder Zinkphosphat und gegebenenfalls Dimethylpolysiloxan als Beschichtungsmaterialien kombiniert werden.

Bismutvanadatpigmente, die Aluminium im Pigmentgrundkörper enthalten, d.h. mit Aluminium dotiert sind, sind aus den US-A-4 026 722 und 4 230 500 bekannt, nach denen die Herstellung solcher Bismutvanadatpigmente durch gemeinsames Tempern von Aluminium- und Bismutoxid und Ammoniumvanadat bzw. durch Festkörpersynthese aus den Phosphaten erfolgt. Weiter werden in der EP-A-640 566 Bismutvanadatpigmente beschrieben, die mit Kombinationen verschiedener Metalle dotiert sind und auch Phosphat als teilweisen Ersatz für Vanadat enthalten können und durch naßchemische Fällung hergestellt werden. Als Dotierungsmetall wird u.a. Aluminium genannt.

Schließlich sind aus der EP-A-1 072 656 Mischungen von Bismutvanadatpigmenten mit Phosphaten, u.a. auch mit Aluminiumphosphat, bekannt, die durch gemeinsames Naßvermahlen hergestellt werden. Durch den Phosphatzusatz wird die Standzeit von mit Bismutvanadat pigmentierten Lacken erhöht, d.h. die üblicherweise mit der Zeit erfolgende Viskositätszunahme wird deutlich verringert.

Keine dieser Schriften befaßt sich mit dem Einsatz von Bismutvanadatpigmenten in Pulverlacken. Bislang wurden Pulverlacke bei Temperaturen bis 190°C in wenigen Minuten auf den zu lackierenden Oberflächen eingebrannt. Die Einbrennbedingungen werden aber zunehmend verschärft, so daß jetzt u.a. Überbrandtemperaturen von > 190°C verwendet werden, bei denen die auf dem Markt erhältlichen Bismutvanadatpigmente nicht nur vergrünen, sondern auch die Lackeigenschaften beeinträchtigen. So wird die Lackierung spröde, zeigt Krater und haftet schlecht auf der zu lackierenden Oberfläche.

Der Erfindung lag daher die Aufgabe zugrunde, diesen Mängeln abzuhelfen und Bismutvanadatpigmente für die Einfärbung von Pulverlacken bereitzustellen.

Demgemäß wurde die Verwendung von Bismutvanadatpigmenten, die einen Gehalt von ≥ 1,4 Gew.% Aluminium aufweisen, zur Einfärbung von Pulverlacken gefunden.

Bei Verwendung derartiger Bismutvanadatpigmente in Pulverlacken ist überraschenderweise weder eine Vergrünung noch eine der oben beschriebenen weiteren Beeinträchtigungen der Lackierung zu beobachten.

In der Regel enthalten die erfindungsgemäß zu verwendenden Bismutvanadatpigmente 1,4 bis 10 Gew.-%, bevorzugt 1,5 bis 5 Gew.%, Aluminium.

Die Bismutvanadatpigmente können dabei mit einer schwerlösliche Aluminiumverbindungen enthaltenden Beschichtung versehen sein, mit Aluminium dotiert sein oder im Gemisch mit schwerlöslichen Aluminiumverbindungen vorliegen.

Selbstverständlich ist auch jede Kombination dieser Maßnahmen möglich.

So kann beispielsweise die Beschichtung mit schwerlöslichen Aluminiumverbindungen mit einer Dotierung des Pigmentgrundkörpers mit Aluminium kombiniert werden. In diesem eine bevorzugte Ausführungsform der Erfindung darstellenden Fall liegt die Summe des im Pigment und auf dem Pigment enthaltenen Aluminiums bei ≥ 1,4 Gew.-%, d.h. die Beschichtung muß nicht allein die erforderliche Menge an Aluminium enthalten.

Eine weitere bevorzugte Ausführung stellt die Verwendung von Bismutvanadaten dar, die Aluminium ausschließlich in der Beschichtung enthalten.

Hier wie übrigens auch bei allen anderen Varianten kann das Bismutvanadatpigment in der tetragonalen oder in der bevorzugten monoklinen Kristallmodifikation und in jeder bekannten Dotierungsform vorliegen. Beispielhaft sei auf die in den folgenden Veröffentlichungen beschriebenen Pigmente verwiesen: EP-A-074 049, 239 526, 430 888, 492 244, 551 637, 640 566, 758 670 und 984 044 sowie WO-A-92/11205.

Für die Beschichtung geeignete schwerlösliche Aluminiumverbindungen sind insbesondere Aluminiumphosphate, vor allem Aluminiumorthophosphat AlPO₄ und Hydroxid- und/oder Halogenidionen enthaltende Phosphate wie Al₂PO₄(OH)₃ und Al₃(PO₄)₂(OH,F)₃, Aluminiumoxide, vor allem Al₂O₃ und wasserhaltige Aluminiumoxide wie AIOOH und Al(OH)₃, Alumosilikate, Hydrotalcit und AlF₃. Bevorzugt sind Aluminiumphosphate und Aluminiumoxide, wobei AIOOH besonders bevorzugt ist.

Die Beschichtung mit schwerlöslichen Aluminiumverbindungen kann stets auch mit der Beschichtung mit weiteren schwerlöslichen Metallverbindungen, die bekanntermaßen zur Stabilisierung von Bismutvanadatpigmenten eingesetzt werden, kombiniert werden. Dabei können die Aluminiumverbindungen und die weiteren Metallverbindungen in einer Schicht, z.B. auch als Mischsalz, vorliegen oder als aufeinanderfolgende Schichten aufgebracht werden.

Beispiele für schwerlösliche Metallverbindungen sind Metallphosphate, insbesondere Phosphate von Erdalkalimetallen, wie Magnesium, Calcium und Strontium, Zink und seltenen Erden, wie Cer, wobei Calciumphosphate bevorzugt ist, schwerlösliche Metalloxide, wie Siliciumdioxid, Zirkondioxid und Ceroxid. Selbstverständlich können auch Mischungen dieser Verbindungen sowie auch gemischte Phosphate wie (Ca,Zn)₃(PO₄)₂ verwendet werden.

Die Herstellung der erfindungsgemäß zu verwendenden mit schwerlöslichen Aluminiumverbindungen beschichteten Bismutvanadatpigmente erfolgt üblicherweise durch Fällungsreaktion, indem eine vorzugsweise wäßrige Suspension des Substratpigments, das unbeschichtet oder bereits mit einer stabilisierenden Schicht belegt sein kann, und eine Lösung eines Aluminiumsalzes, z.B. Aluminiumnitrat oder Aluminiumsulfat, intensiv miteinander gemischt und bei einem für die Fällung der schwerlöslichen Aluminiumverbindung geeigneten pH-Wert von üblicherweise 3 bis 10, insbesondere von 5 bis 8, gehalten werden, wobei zur Abscheidung eines Aluminiumphosphats noch eine Phosphatquelle, z.B. Phosphorsäure, anwesend sein muß. Parallel dazu können weitere schwerlösliche Metallverbindungen, z.B. Calcium- oder Calcium/Zinkphosphate, abgeschieden werden. Ebenso ist eine nachträgliche Beschichtung mit schwerlöslichen Metallverbindungen möglich.

Zur Herstellung der erfindungsgemäß zu verwendenden mit Aluminium dotierten Bismutvanadatpigmente können lösliche Aluminiumsalze beim naßchemischen Verfahren vor der Pigmentfällung, z.B. im Gemisch mit den als Edukt dienenden Bismut(III)salzlösungen, oder nach der Vermischung von Bismut- und Vanadiumedukten vor der Rekristallisation zugesetzt werden. Selbstverständlich können die Aluminiumsalze auch in Kombination mit den löslichen Salzen weiterer Dotierungsmetalle verwendet werden. Hierbei können alle bekannten Fällverfahren zum Einsatz kommen.

Ebenso ist die Herstellung von aluminiumdotierten Bismutvanadatpigmenten nach dem Brennverfahren aus festen Ausgangsstoffen möglich. Hier können Bismut-, Vanadium- und Aluminiumedukte, z.B. Bismutoxid, Vanadiumoxid und Aluminiumhydroxid, (sowie gewünschtenfalls die Edukte weiterer Dotierungsmetalle) nach intensiver Vermischung gemeinsam calciniert werden. Es kann aber auch ein bereits fertig hergestelltes Bismutvanadatpigment mit dem Aluminiumedukt calciniert werden.

Die eine weitere Ausführungsform der vorliegenden Erfindung darstellenden Gemische von Bismutvanadatpigmenten mit denn oben genannten schwerlöslichen Aluminiumverbindungen können schließlich vorzugsweise durch gemeinsames Mahlen, insbesondere durch Naßvermahlen, erhalten werden.

Die ebenfalls erfindungsgemäßen Pulverlacke enthalten üblicherweise 1 bis 50 Gew.-% des Bismutvanadatpigments als farbgebende Komponente.

Die Pulverlacke können vorteilhaft zur Beschichtung jedes Substratmaterials, d.h. sowohl von metallischen als auch von nichtmetallischen sowie allen weiteren denkbaren Materialien, eingesetzt werden.

Die erhaltenen Lackierungen zeichnen sich durch ihr homogenes Erscheinungsbild aus. Sie sind nicht spröde, zeigen keine strukturierte Oberfläche (Krater) und haften fest auf dem zu lackierenden Substrat.

### Beispiele

### Herstellung und Prüfung von erfindungsgemäßen Bismutvanadatpigmenten

Zur Prüfung der thermischen Stabilität der erhaltenen Bismutvanadatpigmente wurden Pulverlacke auf Polyester/Hydroxyalkylamid-Basis in einem grünen RAL-Ton hergestellt, auf Aluminumbleche appliziert und anschließlich koloristisch vermessen.

Dazu wurden 25 g des jeweiligen Bismutvanadatpigments mit 888,7 g Polyesterharz (Uralac^{®} P800; Fa. DSM Resins), 37 g Hydroxyalkylamid (Primid^{®} XL 552, Fa. EMS-Primid), 9 g Fließhilfsmittel (BYK 365 P; Fa. Byk Chemie, Wesel), 2 g Entgasungsmittel (Benzoin), 16,7 g C.I. Pigment Yellow 53 (Sicotan^{®} Yellow L1010; BASF Aktiengesellschaft) und 20 g C.I. Pigment Brown 24 (Sicotan Yellow L2110) und 1,6 g C.I. Pigment Green 7 (Heliogen^{®} Green L8731; BASF Aktiengesellschaft) 3 min in einem Labormischer (Fa. MIXACO Dr. Herfeld GmbH & Co. KG) unter Wasserkühlung bei 1000 U/min intensiv gemischt.

Die fertige Mischung wurde anschließend in einem Extruder mit einer Drehzahl von 100 U/min verarbeitet. Die Massetemperatur am Auslauf betrug etwa 110°C. Die plastifizierte Masse wurde durch zwei Kühlwalzen geführt, dabei gewalzt und auf Raumtemperatur abgekühlt. Das dabei entstehende Walzfell wurde von Hand vorgebrochen und danach in der Labormühle (Fa. IKA Labortechnik GmbH) gemahlen. Der Mühleninhalt wurde auf ein 150 µm-Sieb gegeben und in ca. 1 h auf einem Rüttler (Fa. Retsch GmbH & Co. KG) abgesiebt.

Die Applikation des Pulverlackes erfolgte mittels einer Korona Pulverpistole bei einer Spannung von etwa 80 kV auf kleine Aluminiumbleche. Nach dem Beschichten wurden die Bleche in einem vorgeheizten Umluftofen 60 min bei 210°C eingebrannt.

Die koloristische Messung der lackierten Bleche erfolgte jeweils im Vergleich zu einem mit demselben Pulverlack lackierten Blech, das 15 min bei 180°C eingebrannt wurde, (Bestimmung Abweichung der CIELAB-Farbwerte Farbwinkel H (dH), Chroma C* (dC*) und Helligkeit L* (dL*) sowie der Gesamtkoloristik dE) mit einem Spektralphotometer Spectrolino (Fa. Gretag-Macbeth).

Außerdem wurde die Oberfläche der Lackierungen (Verlauf, Struktur und Kraterbildung) visuell beurteilt.

Die erhaltenen Ergebnisse sind in der unten folgenden Tabelle zusammengestellt.

### Beispiel 1

Zunächst wurde analog Beispiel 9 der EP-A-984 044, jedoch unter zusätzlicher Zugabe von 3,8 g Aluminiumnitrat (Al(NO₃)₃×9H₂O) vor dem Erhitzen ein Bismutvanadatgrundkörper hergestellt. 57 g des auf diese Weise erhaltenen Bismutvanadatgrundkörpers wurden durch Einrühren in Wasser in eine 14,3 gew.-%ige Suspension überführt, die dann auf 80°C erhitzt wurde. Bei einem pH-Wert von 6,5, der durch Zugabe von 5 gew.-%iger Natronlauge gehalten wurde, wurden 128,6 g einer 15,3 gew.-%igen Lösung von Aluminiumnitrat (Al(NO₃)₃×9H₂O) zugepumpt. Nach 15 minütigem Nachrühren wurden 202,6 g einer Lösung von Calciumnitrat und Zinknitrat (5,2 Gew.-% Ca(NO₃)₂×4H₂O; 7,6 Gew.-% Zn(NO₃)₂×6H₂O) parallel mit 208,6 einer 4,5 gew.-%igen Phosphorsäure zudosiert, wobei der pH-Wert durch Zugabe von weiterer 5 gew.%iger Natronlauge bei 6,5 gehalten wurde.

Nach einstündigem Nachrühren bei 20°C wurde das beschichtete Pigment abfiltriert, mit Wasser gewaschen und bei 110°C über Nacht im Umluftschrank getrocknet.

Die Beschichtung wurde anschließend noch einmal wiederholt.

Das erhaltene Pigment enthielt 2,1 Gew.-% Aluminium.

### Beispiel 2

80 g eines wie in Beispiel 1 hergestellten Bismutvanadatgrundkörpers wurden durch Einrühren in Wasser in eine 14,3 gew.-%ige Suspension überführt, die dann auf 80°C erhitzt wurde. Bei einem pH-Wert von 6,5, der durch Zugabe von 5 gew.-%iger Natronlauge gehalten wurde, wurden 361,2 g der in Beispiel 1 eingesetzten 15,3 gew.-%igen Aluminiumnitratlösung zugepumpt. Nach 15 minütigem Nachrühren wurden 568,6 g der in Beispiel 1 eingesetzten Lösung von Calciumnitrat und Zinknitrat parallel mit 585,4 g einer 4,5 gew.-%igen Phosphorsäure zudosiert, wobei der pH-Wert durch Zugabe von weiterer 5 gew.-%iger Natronlauge bei 6,5 gehalten wurde.

Nach einstündigem Nachrühren bei 20°C wurde das beschichtete Pigment abfiltriert, mit Wasser gewaschen und bei 110°C über Nacht im Umluftschrank getrocknet.

Das erhaltene Pigment enthielt 3,4 Gew.-% Aluminium.

### Beispiel 3

80 g eines wie in Beispiel 1 hergestellten Bismutvanadatgrundkörpers wurden durch Einrühren in Wasser in eine 14,3 gew.-%ige Suspension überführt, die dann auf 80°C erhitzt wurde. Bei einem pH-Wert von 6,5, der durch Zugabe von 5 gew.-%iger Natronlauge gehalten wurde, wurden 180,6 g der in Beispiel 1 eingesetzten 15,3 gew.-%igen Aluminiumnitratlösung zugepumpt. Nach 15 minütigem Nachrühren wurde eine Lösung von 21,6 g Zinknitrat (Zn(NO₃)₂×6H₂O) in 284 g Wasser parallel mit 288,4 g einer 2,5 gew.-%igen Phosphorsäure zudosiert, wobei der pH-Wert von 6,5 durch Zugabe von weiterer 5 gew.-%iger Natronlauge gehalten wurde.

Nach einstündigem Nachrühren bei 20°C wurde das beschichtete Pigment abfiltriert, mit Wasser gewaschen und bei 110°C über Nacht im Umluftschrank getrocknet.

Das erhaltene Pigment enthielt 2,3 Gew.-% Aluminium.

### Beispiel 4

80 g eines wie in Beispiel 1 hergestellten Bismutvanadatgrundkörpers wurden durch Einrühren in Wasser in eine 14,3 gew.-%ige Suspension überführt, die dann auf 80°C erhitzt wurde. Bei einem pH-Wert von 6,5, der durch Zugabe von 5 gew.-%iger Natronlauge gehalten wurde, wurden 180,6 g der in Beispiel 1 eingesetzten 15,3 gew.-%igen Aluminiumnitratlösung zugepumpt. Nach 15 minütigem Nachrühren wurde eine Lösung von 15,1 g Zinknitrat (Zn(NO₃)₂×6H₂O) in 284 g Wasser parallel mit 287,2 g einer 2,2 gew.-%igen Phosphorsäure zudosiert, wobei der pH-Wert von 6,5 durch Zugabe von weiterer 5 gew.-%iger Natronlauge gehalten wurde.

Nach einstündigem Nachrühren bei 20°C wurde das beschichtete Pigment abfiltriert, mit Wasser gewaschen und bei 110°C über Nacht im Umluftschrank getrocknet.

Das erhaltene Pigment enthielt 2,4 Gew.-% Aluminium.

### Beispiel 5

Zunächst wurde ein Bismutvanadatgrundkörper analog Beispiel 1, jedoch zusätzlich unter Substitution von 10 mol-% Bismutvanadat durch Aluminiumnitrat hergestellt.

57 g des auf diese Weise erhaltenen Bismutvanadatgrundkörpers wurden durch Einrühren in Wasser in eine 14,3 gew.-%ige Suspension überführt, die dann auf 80°C erhitzt wurde. Bei einem pH-Wert von 6,5, der durch Zugabe von 5 gew.-%iger Natronlauge gehalten wurde, wurden 64,3 g der in Beispiel 1 eingesetzten 15,3 gew.-%igen Aluminiumnitratlösung zugepumpt. Nach 15 minütigem Nachrühren wurden 101,3 g der in Beispiel 1 eingesetzten Lösung von Calciumnitrat und Zinknitrat parallel mit 104,3 g einer 4,5 gew.-%igen Phosphorsäure zudosiert, wobei der pH-Wert durch Zugabe von weiterer 5 gew.-%iger Natronlauge bei 6,5 gehalten wurde.

Nach einstündigem Nachrühren bei 20°C wurde das beschichtete Pigment abfiltriert, mit Wasser gewaschen und bei 110°C über Nacht im Umluftschrank getrocknet.

Das erhaltene Pigment enthielt 2,0 Gew.-% Aluminium.

### Beispiel 6

80 g eines wie in Beispiel 1 hergestellten Bismutvanadatgrundkörpers wurden 30 min bei 550°C calciniert und anschließend durch Einrühren in Wasser in eine 14,3 gew.-%ige Suspension überführt, die dann auf 80°C erhitzt wurde. Bei einem pH-Wert von 6,5, der durch Zugabe von 5 gew.-%iger Natronlauge gehalten wurde, wurden 180,6 g der in Beispiel 1 eingesetzten 15,3 gew.-%igen Aluminiumnitratlösung zugepumpt.

Nach einstündigem Nachrühren bei 20°C wurde das beschichtete Pigment abfiltriert, mit Wasser gewaschen und bei 110°C über Nacht im Umluftschrank getrocknet.

Das erhaltene Pigment enthielt 2,6 Gew.-% Aluminium.

### Beispiel 7

Gemäß Beispiel 10 der EP-A-551 637 wurden 80 g eines Bismutvanadatgrundkörpers hergestellt und nach 30 minütigem Calcinieren bei 550°C durch Einrühren in Wasser in eine 14,3 gew.-%ige Suspension überführt, die dann auf 80°C erhitzt wurde. Bei einem pH-Wert von 6,5, der durch Zugabe von 5 gew.-%iger Natronlauge gehalten wurde, wurden 180,6 g der in Beispiel 1 eingesetzten 15,3 gew.-%igen Aluminiumnitratlösung zugepumpt.

Nach einstündigem Nachrühren bei 20°C wurde das beschichtete Pigment abfiltriert, mit Wasser gewaschen und bei 110°C über Nacht im Umluftschrank getrocknet.

Das erhaltene Pigment enthielt 2,4 Gew.-% Aluminium.

### Vergleichsbeispiel

Zum Vergleich wurde ein Bismutvanadatpigment gemäß Beispiel 10 der EP-A-551 637 hergestellt und stabilisiert.

Das erhaltene Pigment enthielt 1,0 Gew.-% Aluminium.

**Tabelle**

| Pigment aus Bsp | dH | dC* | dL* | dE | Verlauf | Oberflächenstruktur |
|---|---|---|---|---|---|---|
| 1 | -1,5 | -2,5 | -1,0 | 3,1 | gut | homogen glatt |
| 2 | -1,1 | -3,3 | -1,3 | 3,7 | gut | homogen glatt |
| 3 | -2,3 | -4,2 | -2,2 | 5,2 | gut | homogen glatt |
| 4 | -1,7 | -3,0 | -0,9 | 3,5 | gut | homogen glatt |
| 5 | -1,3 | -3,2 | -0,9 | 3,6 | gut | homogen glatt |
| 6 | -2,0 | -3,2 | -1,5 | 4,1 | gut | homogen glatt |
| 7 | -2,2 | -2,6 | -1,2 | 3,6 | gut | homogen glatt |
| V | > 7 | > 7 | > 7 | > 10 | schlecht | Krater |

## Patentansprüche

1. Verwendung von Bismutvanadatpigmenten, die einen Gehalt von ≥ 1,4 Gew.-% Aluminium aufweisen, zur Einfärbung von Pulverlacken.

2. Verwendung nach Anspruch 1, **dadurch gekennzeichnet, daß** die Bismutvanadatpigmente mit einer schwerlösliche Aluminiumverbindungen enthaltenden Beschichtung versehen sind und/oder mit Aluminium dotiert sind und/oder im Gemisch mit schwerlöslichen Aluminiumverbindungen vorliegen.

3. Verwendung nach Anspruch 1 oder 2, **dadurch gekennzeichnet, daß** die Bismutvanadatpigmente mit einer schwerlösliche Aluminiumverbindungen und gewünschtenfalls weitere schwerlösliche Metallverbindungen enthaltenden Beschichtung versehen sind.

4. Verwendung nach Anspruch 1 oder 2, **dadurch gekennzeichnet, daß** die Bismutvanadatpigmente mit Aluminium dotiert und mit einer schwerlösliche Aluminiumverbindungen und gewünschtenfalls weitere schwerlösliche Metallverbindungen enthaltenden Beschichtung versehen sind.

5. Pulverlacke, die als farbgebende Komponente Bismutvanadatpigmente gemäß den Ansprüchen 1 bis 4 enthalten.

6. Pulverlackierungen, die Bismutvanadatpigmente gemäß den Ansprüchen 1 bis 4 enthalten.

## Claims

1. The use of bismuth vanadate pigment containing ≥ 1.4% by weight of aluminum for coloring a powder coating material.

2. The use according to claim 1, wherein the bismuth vanadate pigment has been provided with a coating comprising a sparingly soluble aluminum compound and/or has been doped with aluminum and/or is in the form of a mixture with a sparingly soluble aluminum compound.

3. The use according to claim 1 or 2, wherein the bismuth vanadate pigment has been provided with a coating comprising a sparingly soluble aluminum compound and, if desired, a further sparingly soluble metal compound.

4. The use according to claim 1 or 2, wherein the bismuth vanadate pigment has been doped with aluminum and has been provided with a coating comprising a sparingly soluble aluminum compound and, if desired, a further sparingly soluble metal compound.

5. A powder coating material comprising as coloring component bismuth vanadate pigment according to any of claims 1 to 4.

6. A powder coating comprising bismuth vanadate pigment according to any of claims 1 to 4.

## Revendications

1. Utilisation de pigments de vanadate de bismuth qui présentent une teneur ≥ 1,4% en poids d'aluminium pour la teinture de laques en poudre.

2. Utilisation selon la revendication 1, **caractérisée en ce que** les pigments de vanadate de bismuth sont pourvus d'un revêtement contenant des composés d'aluminium peu solubles et/ou sont dopés avec de l'aluminium et/ou se trouvent en mélange avec des composés d'aluminium peu solubles.

3. Utilisation selon la revendication 1 ou 2, **caractérisée en ce que** les pigments de vanadate de bismuth sont pourvus d'un revêtement contenant des composés d'aluminium peu solubles et si souhaité d'autres composés métalliques peu solubles.

4. Utilisation selon la revendication 1 ou 2, **caractérisée en ce que** les pigments de vanadate de bismuth sont dopés avec de l'aluminium et sont si souhaité pourvus d'un revêtement contenant des composés d'aluminium peu solubles et si souhaité d'autres composés métalliques peu solubles.

5. Laques en poudre qui contiennent comme composant conférant une teinte des pigments de vanadate de bismuth selon les revendications 1 à 4.

6. Laquages en poudre qui contiennent des pigments de vanadate de bismuth selon les revendications 1 à 4.
